# EUROPEAN PATENT SPECIFICATION

(11) **EP 3 983 103 B1**
(45) Date of publication and mention of the grant of the patent: **02.08.2023**
(21) Application number: 20744164.3
(22) Date of filing: 11.06.2020
(51) Int. Cl.: B01D 1/00, B01D 1/22, B01D 1/24, C02F 11/13, E21B 21/06, F26B 3/20, F26B 3/24, F26B 17/20, C02F 101/32, C02F 103/10

(54) **A SLUDGE SEPARATOR**
SCHLAMMABSCHEIDER
SÉPARATEUR DE BOUE

(30) Priority: 17.06.2019 NO 20190741
(43) Date of publication of application: 20.04.2022
(73) Proprietor: RENA QUALITY GROUP AS, 4014 Stavanger (NO)
(72) Inventor: AUSLAND, Tore, 1555 Son (NO); SAMUELSEN, Ørjan Weider, 4044 Hafrsfjord (NO); RANDA, Bent Atle, 9925 Svanvik (NO)
(74) Representative: Acapo AS
(86) International application number: PCT/NO2020/050154
(87) International publication number: WO 2020/256561

(56) References cited:
- GB-A- 205 906
- JP-A- 2018 153 768
- US-A- 2 510 057
- US-A1- 2019 071 340

## Description

The present invention relates to a sludge separator (0) or more specifically a sludge solids / liquid separator, for separating petroleum fluids and other liquids from oil contaminated sludge masses such as the final separated sludge from used drilling mud, well clean-up, well cuttings, and the like, particularly from the petroleum industry. The present invention also relates to a sludge solids/liquid separation method for oil contaminated sludge masses.

### Background art and problems

One practical but contaminating way of "getting rid of" oil contaminated sludge is to burn it. Another way to treat sludge, in order to separate it, is to feed it through a tank, rotate an axial auger fast, i.e. 600 RPM, to friction heat fed sludge, in order to boil off water and oil gases in order to obtain an almost decontaminated dried powder / sand mass at the end. However, the friction heat is high and the energy consumption is high, and the operating temperature in the heating chamber is uneven and uncontrolled to some degree. In the prior art, friction machines the uneven temperature may incur undesired cracking and tar formation to the petroleum liquids.

CN104496136 discloses a device for indirect heating and thermic desorption treatment of oil-polluted waste. The device comprises a cylindrical tank, a waste inlet, a gas outlet, a solid matter outlet, a screw conveyor axially arranged in the tank, said conveyor transporting the oil-polluted waste from the waste inlet to the solid matter outlet. A cylindrical outer tank encloses the tank. The space between the tank and the outer tank is provided with a burner in order to distribute the heat across the surface of the tank. The screw conveyor of CN104496136 is of conventional type and comprises a flighting. A plurality of mud turning plates is attached to said flighting. The purpose of said plates is to ensure that the sludge is more evenly mixed.

CN108929012 discloses a unit for treatment of sewage sludge by decomposing the sludge by means of heat. The unit comprises a cylindrical tank, a sludge inlet, a gas outlet, a solid matter outlet, a screw conveyor axially arranged in the tank, said conveyor transporting the sludge from the sludge inlet to the solid matter outlet, and a heating element arranged at a lower portion of the tank and a heating, spiral-shaped device around the tank. CN105668989 comprises a system for treatment of oil sludge in order to separate oil and gas. The system includes two cylinders wherein the oil sludge is conveyed through the outer cylinder by means of an axially arranged screw conveyor provided in the cylinder for transporting the sludge from the sludge inlet towards the solid matter outlet. A heat element is provided in the inner cylinder.

GB292642 discloses a reaction chamber for reaction between solids and gasses. The chamber is a cylindrical tank with an axially arranged screw conveyor provided in the chamber in order to transport the solid matter from the inlet to the outlet. The reaction chamber is surrounded by a first cavity filled with smelted Lead and a second cavity holding the gas burner.

US2019/071340 A1 discloses a separator and corresponding method for treating slurries comprising solids, oil and water.

GB205906 A, US2510057A and JP2018153768A disclose apparatuses for heating and/or drying liquids or slurries.

With reference to the cited prior art documents, it is, on a general level, desirable to improve control of sludge-separating process in the heating chamber.

### Brief summary of the invention

The invention is a sludge separator (0) as fully described in claim 1 for oil contaminated sludge masses, the sludge separator (0) comprising:
- a first cylindrical, inner tank (31) comprising:
- a sludge inlet (1),
- a first, evaporated gas outlet (7);
- a solid matter outlet (11),
- a conveyor screw or auger (5) axially aligned inside said first, inner tank (31) for transporting oil contaminated sludge masses from said sludge inlet (1) towards said solid matter outlet (11),
- a second cylindrical, outer tank (33) enclosing said first, inner tank (31) such that a cavity (35) is formed around said first, inner tank (31),
- a heating element (13) arranged at least at a lower part of said second, outer tank (33), wherein said cavity (35), in operative state of said sludge separator, is filled with liquid Lead (Pb) so as for distributing heat over said first, inner tank's (31) surface (31i),
- said conveyor auger (5) comprises a plurality of radially extending arms (53), and each arm (53) is provided with a conveyor blade pair (52) with a first and second conveyor blade (54, 56), wherein the first conveyor blade (54) is arranged at a distance with respect to the second conveyor blade (56) and wherein said conveyor blade pair (52) is arranged at outer ends of said arms (53).

One advantage conferred is significantly reduced temperature gradient in the sludge to be treated (see Embodiments-section for further details). More precisely and as discussed in connection with Embodiments-section, the sludge is smeared, i.e. rather evenly distributed, along the inner surface of the inner tank by means of the blades. In this way, a thin layer of sludge is brought in contact with said inner surface. As this surface is substantially uniformly heated by means of the Pb-mantle surrounding the inner tank, all parts of the thin sludge layer have approximately the same temperature. Accordingly, temperature gradient in the sludge to be treated is significantly reduced. Also, excess heating of the sludge is avoided. Conclusively, by virtue of the present invention, control of the sludge-drying process in a sludge separator for oil contaminated sludge masses is significantly improved. This improvement is obtained by reducing temperature gradient in the sludge undergoing treatment and/or by avoiding excess heating of the sludge.

In a related context, metal-to-metal contact between the conveyor blade and the inner surface of the inner tank is avoided. More specifically, gap between the blades of a blade pair is at least partially filled with sludge masses of varying wetness, which sludge masses form a continuously exchanged wiper mass that scrapes along the inner surface of the inner tank.

The invention is also the associated method indicated in an independent claim 22.

Embodiments of the invention are defined in the dependent claims and in the description.

### Brief Figure captions

The invention is illustrated in the attached drawings, wherein
Fig. 1 is a side elevation view of a sludge solids / liquids separator (0) according to an embodiment of the invention, with an inlet section (100) for sludge to the left, two generally equal heating chamber sections (101, 102) at the middle, and an outlet section (111) to the right. Oil contaminated sludge is fed into the inlet (1) and de-contaminated dry masses are fed out through the outlet (11), while boiled-off gases escape through gas outlet (7) and are separated and / or liquefied. Heating elements (13) and auxiliary heating elements (13s) are illustrated.

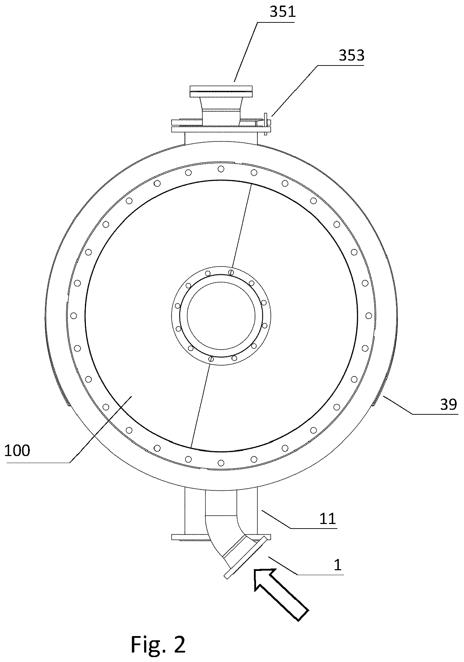

Fig. 2 is an end view as seen from the inlet section (100), with the sludge inlet (1) here arranged at the bottom. A Lead inlet (351) is shown at the top of the separator (0).

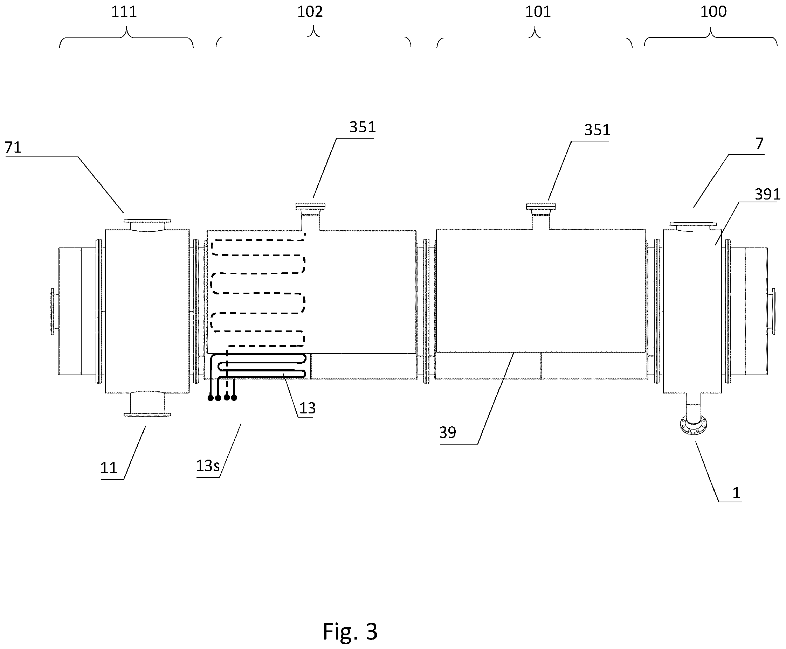

Fig. 3 is an opposite side elevation view relative to Fig. 1. Heating elements (13) are illustrated at the bottom of an outer tank (33)

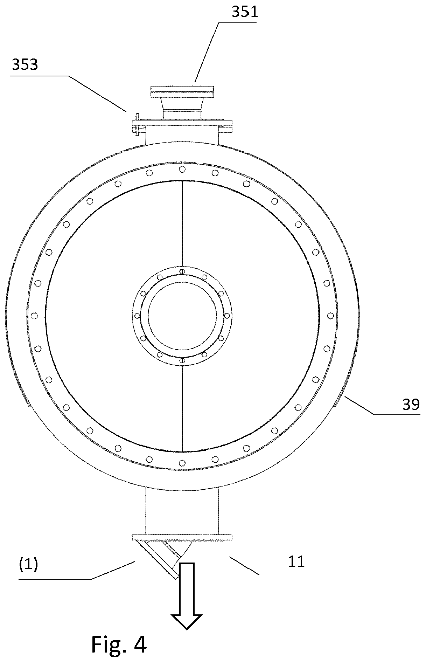

Fig. 4 is an opposite end view relative to Fig. 2, and at the bottom of the end section (111) is shown the outlet (11) for decontaminated dry sludge remains.

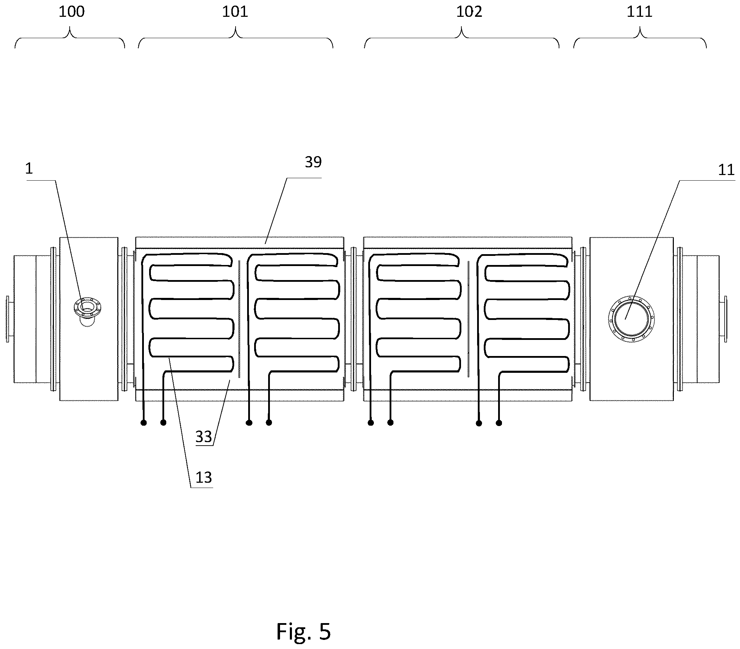

Fig. 5 is a bottom view of the sludge solids / liquid separator (0) of the embodiment of the invention shown in the previous Figures, showing the heating elements (13) arranged at the 1/3 bottom portion of the outer tank (33). Please understand that the inlet (1) may be arranged elsewhere than at the bottom of the inlet section (100), while the gas outlet (7) from practical reasons should be at the top.

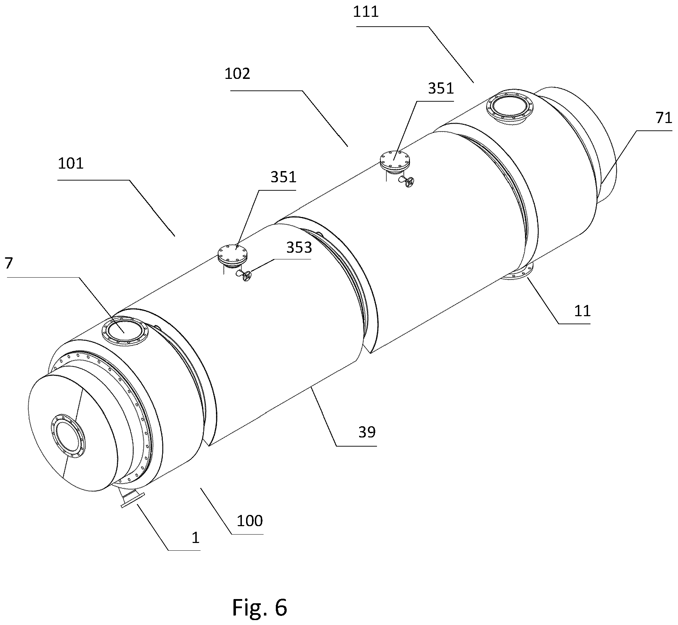

Fig. 6 is an isometric view of the separator (0) of the embodiment of the invention. Please see that there are cover lids on the Lead inlets (351), and that an overpressure Argon (Ar) supply should be connected to the Argon inlets (353) in order to avoid lead gas poisoning and gas contamination to the Lead mantle layer in the cavity (35). A burst disc is arranged in the contingency outlet (71).

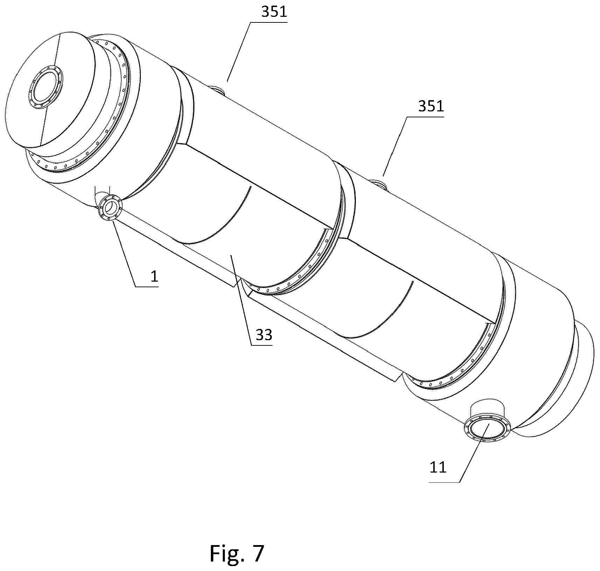

Fig. 7 is a lower isometric view of the same tank, showing, in this embodiment, the bottom thirds of the outer tank, and the sludge inlet (1) and the outlet (11). This bottom third is exposed to heat from below. In other embodiments more than or less than a third is exposed to heat.

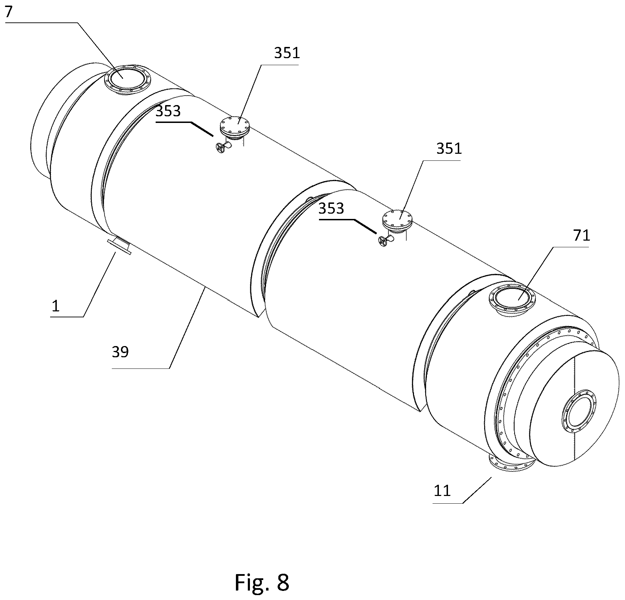

Fig. 8 is an opposite end isometric view as compared to Fig. 6.

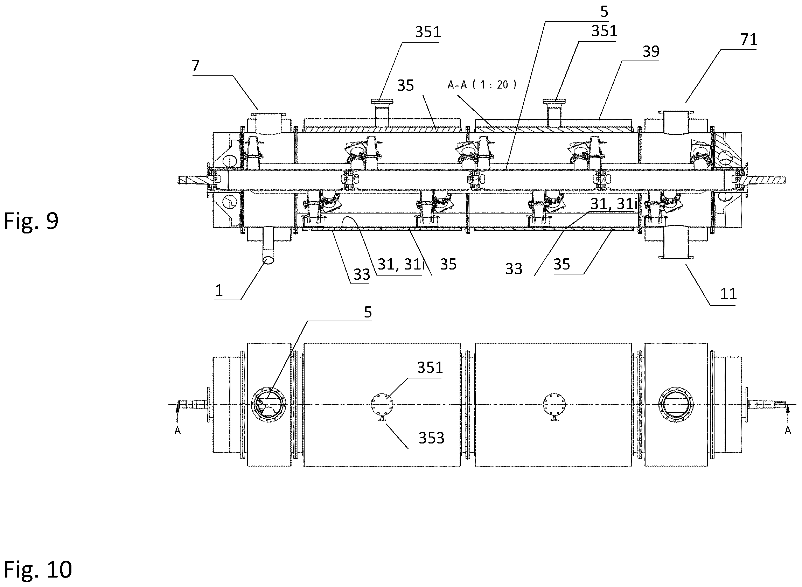

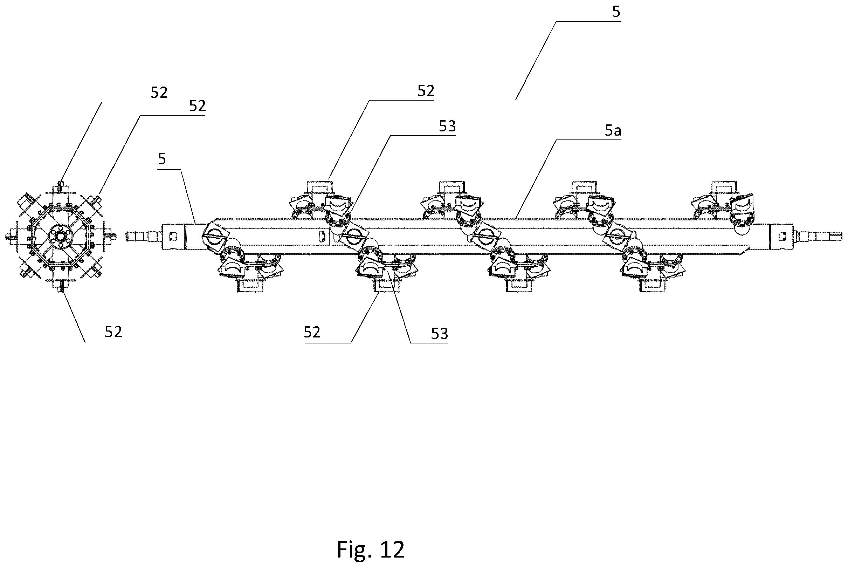

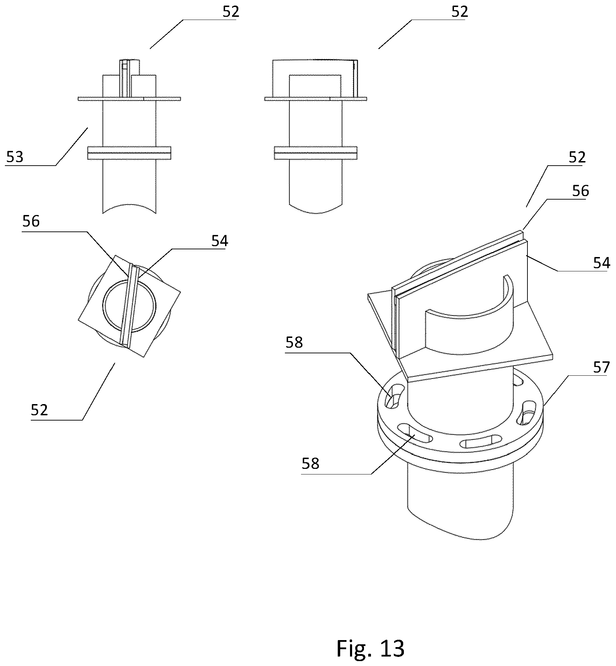

Fig. 9 is an important illustration. It is a longitudinal vertical cross section of the sludge separator (0), and shows the hatched liquid Lead mantle filling the cavity (35) between the inner tank (31) and the outer tank (33). There is arranged the conveyor auger (5) axially through the cylindrical inner tank (31), with bearings on the inlet section (100) and the opposite outlet section (111). Arms (53) on the auger shaft (5a) carry "paddle" - like wiper blades or conveyor blades (52), please also see Figs. 12 and 13. Please notice that there is no metal to metal contact between the conveyor blade (52) and the inner surface (31i) of the inner tank (31).
Fig. 10 is a top view of the separator (0) of the embodiment of the invention with an open, uncovered gas outlet (7) for illustration, showing the shaft (5i) and part of a conveyor blade (52) of the conveyor auger (5).

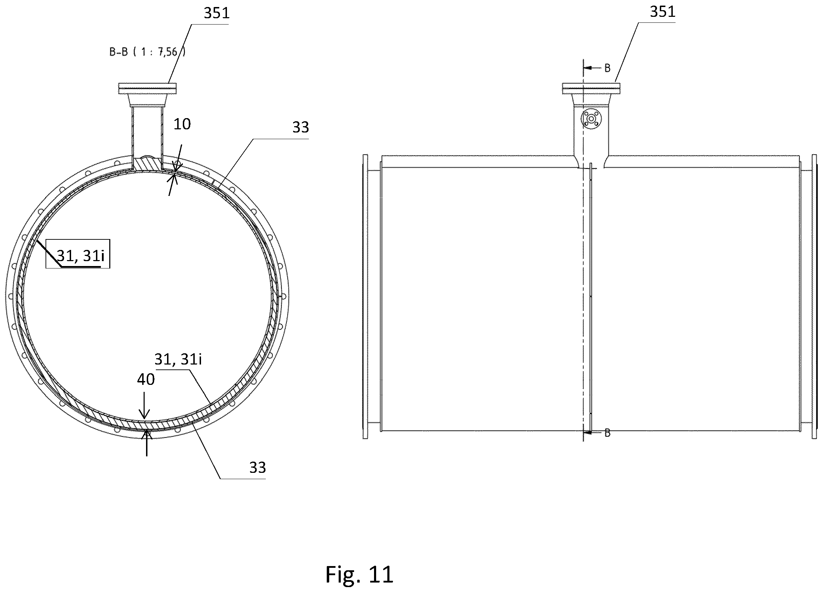

Fig. 11 is also an important illustration. Here is shown a vertical cross section to the left along the line B-B in the axial view to the right. Here is clearly shown that the cavity (35) gap between the inner tank (31) and the outer tank (33) is wider at the bottom of the section than at the top of the section, and that it is filled with Lead to a desired level. In an embodiment of the invention the Lead extends a bit upwardly into the lower part of the Lead intake (351) at the top. In an embodiment such as this illustrated embodiment of the invention, there is a gap at the top of 10 mm and a wider gap of 40 mm at the bottom of the Ø 1200 mm inner tank. It is experienced by the inventors that this gap difference provides an improved heat distribution as compared to a strictly symmetrical tank cross section arrangement. Other embodiments of the tank may have other dimensions and gap sizes.
Fig. 12 is an end view and a lateral elevation view of the conveyor auger (5) with arms (53) with conveyor blades (52) with adjustable attack angle (see the screw-connected flanges). Each conveyor blade (52) in this embodiment has a double blade (54, 56) arrangement (please see Fig. 13) with an outer edge to be rotated near, but not in mechanical contact with, the inner wall (31i) of the inner tank (31). An electrical motor is connected to one of the ends of the shaft (5). In this embodiment there are arranged longitudinal reinforcement ribs onto the cylindrical hollow shaft.
Fig. 13 comprises different views of the arm (53) with a conveyor blade (52). Please notice the gap between the double blades pair (54, 56) which may fill with sludge material to act as a wiper. Please also see the adjustable angle flange making it possible to adjust the conveyor blade angle.

### Embodiments of the invention

Sludge in the context of the present invention may comprise the remains from an earlier separation process which separated water, oil, oil contaminated cuttings, and oil contaminated drilling mud from a slop tank. The slop tank may hold a variety of oil and particle contaminated sludge which may be separated using a membrane separator, but at some stage the particle content becomes so high that it is more feasible to make the last separation of the sludge in the apparatus and process of the present invention. The desired end products of the present invention is water, oil, and decontaminated silt/sand/cuttings with less than 0.5% oil pollution remaining on the particles.

The present invention is a sludge separator (0) for separating fluids (gas and liquids) and solid matter in oil contaminated sludge masses]. The sludge separator (0) comprises a first tank (31) further comprising:
a sludge inlet (1) for feeding in sludge comprising oil contaminated masses,
a first evaporated gas outlet (7) for removing gas evaporated from said oil contaminated masses; and a solid matter outlet (11) for removing decontaminated solid matter.

Further, the sludge separator comprises:
- a transport auger (5) arranged inside said first tank (31), the transport auger (5) for transporting and kneading oil contaminated masses from said sludge inlet (1) towards said solid matter outlet (11); the conveyor auger rotation speed is 10 - 60 rotations per minutes,
- a second, outer tank (33) at least partially enclosing said first, inner tank (31) such that a cavity (35) is formed around said first, inner tank (31),
- a heating device (13) arranged at least at a lower part of said second, outer tank (33), and
- wherein said cavity (35), in the operative state of the sludge separator, is filled with liquid Lead (Pb) so as for distributing heat over said first, inner tank's (31) surface (31i), such that a temperature in the first tank (31) approaches a uniform distribution over the inner tank's surface (31i).

The cavity (35) filled with Lead is, and works as, a heat conducting liquid mantle about the inner tank (31). The sludge is pumped in via the inlet (1) into the inner tank (31). It is not massively conveyed ahead by the transport auger throughout the entire cross-section of the inner tank, but sheared and smeared out along the inner surface (31i) of the inner tank (31) while being gradually pushed in an increasingly evaporated-off, gradually dryer and cleaner state towards the solid matter outlet (11) for being removed for other use. The cleaned, decontaminated masses should have a remaining proportion of petroleum less than 0.5%. In a test run of the device we have achieved 0.18% pollution, which is far better than the requirement from the operator company.

The evaporated gas, which comprises water vapour and boiled-off and evaporated petroleum gas from the sludge (oil contaminated wet clay and/or sand and/or rock fragments and/or metal particles) is released through the evaporated gas outlet (7) to a scrubber, condenser or gas separator (9) for separating petroleum gas, petroleum liquids, and water.

So far we have described the apparatus which is designed for decontaminating oil-contaminated sludge.

If seen as a process, the invention is a sludge separation method for oil contaminated sludge masses, wherein the method is fully described in claim 22 and comprises the steps of:
- feeding oil contaminated sludge via an inlet (1) into a first end of a first, cylindrical inner tank (31);
- transporting said sludge from said inlet (1) to an oppositely arranged outlet (11) by a rotating conveyor auger (5) and smearing said sludge peripherally around an inner surface (31i) of said first,
   inner tank (31), while at the same time heating said sludge by evenly heating the whole surface of said inner tank (31) by smelted Lead surrounding the entire inner tank (31),
- thereby gradually evaporating water and oil gas from solid matter of the sludge;
- removing said petroleum gas and water vapour via a first gas outlet (7),
- removing decontaminated solid matter via a solid matter outlet (11) opposite of said inlet (1); and
- processing removed oil gas and water vapour in a gas separator.

One significant advantage of the liquid Lead distributing the heat more uniformly over the inner tank's (31) surface (31i) is that the sludge is heated more evenly both with regard to angular position on the inner surface (31i), but also with respect to time, and that excess heating of the masses is avoided. Excess heating of petroleum fluids in the presence of available Oxygen may incur undesired cracking of the petroleum fluids, and may also incur undesired combustion in petroleum gases formed during the heating. A barrier in the feed line and in a rotary valve on the outlet prevents such Oxygen to enter, and in addition we keep an overpressure in the system over the atmospheric pressure.

Distributing the temperature more evenly inside the inner tank (31) also reduces the risk of igniting an explosion of the evaporated petroleum gases inside the inner tank (31).

In previous sludge separators without the Lead mantle about the inner tank, we experienced about 250 deg. C. temperature difference between the lower, directly heated inner tank portion and the top portion of the inner tank. It is desirable to have a significantly lower temperature difference.

With the present invention, we have measured about 20 deg. C. temperature, i.e. slightly cooler inside the top than inside the bottom. Having a more even angular heat distribution would also prevent having too low temperature in the top of the inner tank compared to the lower portions, which could induce gas to precipitate as liquid in the top of the inner tank, delaying the drying process.

In the sludge separator (0) of the present invention, said first, inner tank (31) and said second, outer tank (33) are cylindrical.

In an embodiment of the invention the first, inner tank (31) and said second, outer tank (33) are concentric.

In an embodiment of the invention, the first, inner tank (31) and said second, outer tank (33) are slightly excentrically arranged, with a larger gap between their bottoms than between their tops, in order for the thickness of the liquid Lead mantle to be larger at the bottom portion where the heating occurs on the outside surface of the outer tank (33) , and where the sludge thickness may be higher initially, particularly near the inlet (1). For an embodiment the diameter Ø of the inner tank is 1200 mm, the lower gap 4 cm, and the upper gap 1 cm.

In the present invention, the transport device (5) is arranged for distributing the oil contaminated masses by smearing it out peripherally around the inner surface of the first tank (31).

The blades of the conveyor auger (5) have a gap between their outer edge and the inner surface (31i) of the inner tank (31). According to the invention, the blades (54, 56) of the conveyor auger (5) are arranged in parallel pairs (52) with a mutual gap of for instance about 1 - 5 cm, said gap for being partially filled with more or less wet sludge masses which will form a continuously exchanged wiper mass wiping along the inner surface (31i) of the inner tank (31), thus preventing steel to steel contact along the inner surface (31i) of the inner tank (31).

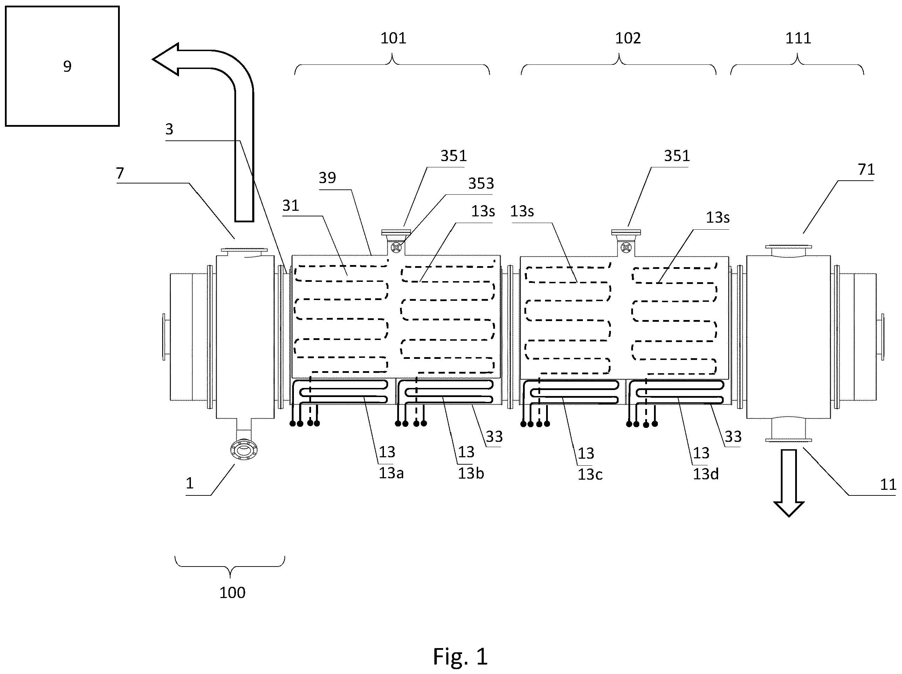

In the embodiment shown in the drawing figures, see Fig. 1, there is arranged a Lead inlet (351) into the top of the inner tank (31) for feeding Lead (Pb) into said cavity (35). Please also see Fig. 11. In the left portion of Fig. 11, it is illustrated that the Lead level may in the operative state extend a bit up into the cylindrical pipe sleeve with the Lead inlet (351) in order to ensure that the level is above the top of the outer tank (33) in order to preserve the mantle layer formed by the Lead. The Lead level does not necessarily have to be above the top of the inner tank, as long as a satisfactory heat distribution is achieved. There may be an observation window for the Lead level in the pipe sleeve holding the Lead inlet (351).

In an embodiment of the invention there is arranged an Argon (Ar) inert gas inlet to the Lead cavity (35). The Argon (Ar) inert gas serves at least two purposes: It maintains an overpressure in the Lead filled cavity (35) so as for avoiding intrusion of other gases such as explosive gases from the inner tank (31). Other noble gases may be used but Argon is easily available as it constitutes almost 1% by volume of the atmosphere. It prevents oxidation of the smelted Lead. In the test runs with the illustrated embodiment of the present invention the Argon overpressure is 0.2 Bar above the atmospheric pressure. During operation with smelted Lead, the Lead inlets (351) must be closed with caps on the flanges in order to prevent Lead fumes leaking out to the atmosphere and contaminate the operators. Lead poisoning is serious and incurs generally non-reversible neurological and cognitive damage. In an embodiment of the invention the transport device (5) is a kneader and conveyor auger (5) axially aligned inside the first tank (31), with a first end of the kneader and conveyor auger (5) arranged near the inlet (1) and a second end of the kneader and conveyor auger arranged near the second outlet (11), please see Figs. 9 and 10.

In an embodiment of the invention there is a safety outlet (71), connected to the first, inner tank (31), with a burst disc for mitigating explosions inside the first, inner tank (31). It can be connected almost in any practical positions, in the illustrated embodiment it is placed on top of the outlet section. In the prior art tank without a Lead mantle we have experienced small explosions due to ignition of the evaporated petroleum gas from the sludge inside the tank.

There may be arranged an insulation layer (39) at least partially covering the second, outer tank (33).

In the illustrated embodiment the insulation layer (39) covers the upper 2/3 of the outer tank (33), while the heating device (13) cover the lower 1/3. This may be done slightly different according to the discretion of the constructing engineer. It is believed that the heat supplied below the lower, exposed portion of the outer tank (33) will drive convection of the Lead liquid. In an embodiment, the heating element (13) in the bottom is slightly angularly asymmetrically arranged in order to drive the convection automatically.

In an embodiment of the invention the sub heating elements (13, (13a, 13b, ....)) comprised by the heating device (13) may be individually controlled, as the introductory sub heating element (13a) near the inlet (1) may work on a wetter and more oil-contaminated portion of the initially processed sludge, thus requiring more added heat than the dryer and cleaner sludge remains approaching the outlet (11). The heating device (13) may be electrical or a gas burner. The first requirement for the heating device (13) is to smelt and / or maintain the liquid state of the Lead in the entire volume (35) to form a liquid Lead mantle about the inner tank (31). The melting temperature of Lead is 327 deg. C. If desired, one may heat the Lead to about 450 - 470 deg. C (as measured within the Lead layer near the outer tank) depending on the nature of the sludge. In one embodiment, heating element (13) is heating the first tank at a higher temperature than the melting point of Lead and below the boiling point of Lead. The sub heating elements (13a, b, c, d) near said inlet (1) provide higher heating power than sub heating elements (13a, b, c, d) near said solid matter outlet (11).

In an embodiment of the invention, auxiliary heating elements (13s) are arranged on the remaining circumferential surface of the outer tank (33) not covered by the heating device (13). The heating device (13) and the auxiliary heating elements (13s) thus together cover the circumference of the outer tank (33) and may be operated together, particularly during the run-in phase of the tank when the Lead in the cavity is entirely or partly solid and shall be smelted before ordinary operation commences. In an embodiment of the invention the auxiliary heating elements (13s) cover the remaining 2/3 of the circumference, and may be arranged under the thermal insulation layer, directly on the surface of the outer tank (33).

The auxiliary heating elements may utilize the power capacity available while the tank is empty and needs no process energy, just smelting energy, and may be switched off when all the Lead is smelted and ordinary operation commences with pumping in of sludge through inlet (1). An advantage of this embodiment is that large temperature differences are avoided; one should not exceed 120 Deg C in order to avoid large thermal expansion differences between different parts of the tank. Large thermal expansion differences could incur misalignment between the auger and the inner tank (31) and / or deformation of the inner or outer tank which could incur cracks. When the Lead has smelted, there is thermal convection in the liquid Lead, and only the bottom-arranged heating device (13) is required. In the illustrated embodiment with an inner tank (33) of Ø 1200 mm we have conducted test runs with 5150 kg / hr through the inlet, with up to 200 to 300 kW per sub heating element (13a, 13b, ...), and a retention time for the material of 8 - 12 minutes, obtaining 0.18 per cent remaining oil pollution in the decontaminated dried sludge at the outlet (11).

In an embodiment of the invention please see Fig. 9, the hatched liquid Lead mantle fills the cavity (35) between the inner tank (31) and the outer tank (33). The conveyor auger (5) extends axially through the cylindrical inner tank (31), with bearings on the inlet section (100) and the opposite outlet section (111). The arms (53) on the auger shaft (5a) carry "paddle" - like wiper blades or conveyor blades (52), please also see Figs. 12 and 13. Fig. 10 is a top view of the separator (0) of the embodiment of the invention with an open, uncovered gas outlet (7) for illustration, showing the shaft (5i) and part of a conveyor blade (52) of the conveyor auger (5) visible within the open hatch.

In the embodiment shown in Fig. 12, please also see Fig. 13, each conveyor blade (52) in this embodiment has a double blade (54, 56) arrangement with an outer edge to be rotated near, but not in mechanical contact with, the inner wall (31i) of the inner tank (31). An electrical motor is to be connected to one of the ends of the shaft (5). In an embodiment there are arranged longitudinal reinforcement ribs onto the cylindrical hollow shaft. The pair of blades (54, 56) are attached to the outer end of the radial arm (53). The radial arm (53) is subdivided into an inner section attached to the shaft, and with a flange connection (57), please see Fig. 13) which is rotationally adjustable about the axis of the radial arm (53), please see each flange bolt hole (58) forming a sector allowing fixation of each conveyor blade (52) in a desired attack angle individually. According to an embodiment of the invention, there is no metal to metal contact between the conveyor blade (52) and the inner surface (31i) of the inner tank (31). According to the present invention the gap between the double blades pair (54, 56) fills with sludge material to act as a wiper. The sludge mass may gather between the pair of blades (54, 56) to farm a ductile mass which wipes the inner surface (31i) roughly the way a rubber wiper blade would do. Depending on the attack angle of the conveyor blade, their mutual gap, the gap between their outer edges and the inner surface (31i) if the inner tank, and the properties of the sludge mass locally along its path from inlet (1) to outlet (11), the sludge mass which is temporarily held between the blades, may gradually be replaced as the blades rotate and the mass moves and dries out. As the mass becomes drier and less sticky and thus less coherent while being transported towards the outlet (11), the pair steel blades (54, 56) may to a lesser degree retain such sludge mass, which gradually dried out, between the two blades (54, 56) but regardless they will transport dry mass the final portion towards the outlet (11) due to their attack angle and the fact that the almost dry mass will assemble as a thicker bottom layer in the tank towards the outlet.

The property of forming a wiper-blade like layer of sludge mass between the two blades (54, 56) which continuously wipes the sludge mass around the periphery of the inner surface (31i) of the inner tank and simultaneously towards the outlet, solves considerable problems related to hotspot deformation which may otherwise be incurred to the tank wall. Hotspot-deformation of the tank wall was sometimes incurred and is believed to be due to an undesired and uncontrolled formation of spots or a local layer of sludge mass stuck to the inner surface of the tank. It is believed that such a stuck layer will be thermally insulating, thus reducing the thermal transfer from the heating source to the sludge mass, thus simultaneously incurring both reduced production capacity and also risking thermal or mechanical deformation of the tank wall. ,

## Claims

1. A sludge separator (0) for oil contaminated sludge masses, the sludge separator (0) comprising:
- a first cylindrical, inner tank (31) comprising:
- a sludge inlet (1),
- a first evaporated gas outlet (7);
- a solid matter outlet (11),
- a conveyor auger (5) axially aligned inside said first, inner tank (31) for transporting said oil contaminated sludge masses from said sludge inlet (1) towards said solid matter outlet (11), said conveyor auger comprising an axially extending shaft (5a),
- a second cylindrical, outer tank (33) enclosing said first, inner tank (31) such that a cavity (35) is formed around said first, inner tank (31),
- a heating element (13) arranged at least at a lower part of said second, outer tank (33), **characterized in that**
- said cavity (35), in an operative state of said sludge separator, is filled with smelted Lead (Pb) so as for distributing heat evenly over the whole said first, inner tank's (31) surface (31i) and **in that** said conveyor auger (5) comprises a plurality of radially extending arms (53), and each arm (53) is provided with a conveyor blade pair (52) with a first and second conveyor blade (54, 56) arranged at outer ends of said arms (53) for smearing the sludge masses peripherally around an inner surface (31i) of said inner tank (31), wherein the blades (54, 56) of the conveyor auger (5) have a gap between their outer edge and the inner surface (31i) of the inner tank (31) and are arranged in parallel pairs with a mutual gap, said gap for being partially filled with more or less wet sludge masses which will form a continuously exchanged wiper mass wiping along the inner surface (31i) of the inner tank (31), thus preventing steel to steel contact along the inner surface (31i) of the inner tank (31).

2. The sludge separator (0) according to claim 1, wherein said first, inner tank (31) is asymmetrically arranged in said second, outer tank (33) such that said cavity (35) is wider at a bottom portion and narrower at a top portion of said cavity (35).

3. The sludge separator (0) according to claim 2, wherein said cavity (35) is 4 cm wide at the bottom and 1 cm wide at the top, and wherein a diameter of said first, inner tank (31) is 1200 mm.

4. The sludge separator (0) according to any of the preceding claims, wherein the shaft (5a) of the conveyor auger (5) has a first end arranged near said inlet (1) and a second end arranged near said solid matter outlet (11).

5. The sludge separator (0) according to any of the preceding claims, wherein said conveyor auger rotation speed is 10 - 60 rotations per minutes.

6. The sludge separator (0) according to any of the preceding claims, wherein conveyor blades (54, 56) have adjustable attack angle.

7. The sludge separator (0) according to any of the preceding claims, further comprising a Lead inlet for feeding Lead into said cavity (35), wherein said Lead inlet is directed upwardly from said cavity (35).

8. The sludge separator (0) according to any of the preceding claims, further comprises an Argon (Ar) inlet for feeding Argon under over pressure into said cavity (35).

9. The sludge separator (0) according to claim 8 and 9, wherein said Lead inlet and said Argon inlet are arranged into a same portion of said cavity (35).

10. The sludge separator (0) according to any of the preceding claims, further comprises an observation window to see level and state of Lead inside the cavity (35).

11. The sludge separator (0) according to any of the preceding claims, wherein the level of smelted Lead inside said cavity (35) is above the top of the first, inner tank (31) and preferably also the top of the second, outer tank (33).

12. The sludge separator (0) according to any of the preceding claims, further comprises a second, safety gas outlet (71), connected to the first, inner tank (31), with a burst disc for mitigating explosions inside said first, inner tank (31).

13. The sludge separator (0) according to any of the preceding claims, further comprises an insulation layer (39) at least partially covering said second, outer tank (33).

14. The sludge separator (0) according to any of the preceding claims, wherein said heating element (13) covers a bottom surface sector of said second, outer tank's (33) surface (33i).

15. The sludge separator (0) according to claim 14, wherein said heating element (13) covers a bottom surface sector of one third of said second, outer tank's (33) surface (33i).

16. The sludge separator (0) according to claim 14 or 15, wherein said heating element (13) in the bottom is slightly angularly asymmetrically arranged in order to drive the convection automatically.

17. The sludge separator (0) according to any of the claims 14 - 16, wherein said insulation layer covers the remaining surfaces of the second, outer tank's (33) surface (33i).

18. The sludge separator (0) according to any of the preceding claims, wherein said heating element (13) is subdivided into a plurality of sub heating elements (13a, b, c, d) such that the heating element temperature can be controlled independently.

19. The sludge separator (0) according to claim 18, wherein said sub heating elements (13a, b, c, d) near said inlet (1) provide higher heating power than sub heating elements (13a, b, c, d) near said solid matter outlet (11).

20. The sludge separator (0) according to any of the preceding claims, wherein said heating element (13) is heating the first tank at a higher temperature than the melting point of Lead and below the boiling point of Lead.

21. The sludge separator (0) according to any of the preceding claims, wherein said first evaporated gas outlet is arranged near a top portion of said first, inner tank (31).

22. A sludge solids / liquid separation method for oil contaminated sludge masses, wherein the method comprises the steps of:
- feeding oil contaminated sludge via an inlet (1) into a first end of a first, cylindrical inner tank (31), PCT/N02020/050154 further Amended claims after second Written Opinion and upon filing with the EPO
- transporting said oil contaminated sludge masses from said inlet (1) of said cylindrical inner tank (31) to an oppositely arranged outlet (11) by a rotating conveyor auger (5) having an axially extending shaft (5a) and smearing said sludge peripherally around an inner surface (31i) of said first, inner tank (31) by means of conveyor blade pairs (52) with a first and second conveyor blade (54, 56), said conveyor blade pairs (52) are arranged at an outer end of each arm (53) of a plurality of radially extending arms (53), wherein the blades (54, 56) of the conveyor auger (5) have a gap between their outer edge and the inner surface (31i) of the inner tank (31) and are arranged in parallel pairs with a mutual gap,
said gap for being partially filled with more or less wet sludge masses which will form a continuously exchanged wiper mass wiping along the inner surface (31i) of the inner tank (31), thus preventing steel to steel contact along the inner surface (31i) of the inner tank (31, while at the same time heating said oil contaminated sludge by evenly heating the whole surface (31i) of said inner tank (31) by smelted Lead (Pb) surrounding the entire inner tank (31), by heating an outer tank (33) containing the smelted Lead surrounding said inner tank (31), thereby gradually evaporating water and oil gas from solid matter of the sludge,
- removing said petroleum gas and water vapour via a first gas outlet (7),
- removing decontaminated solid matter via a solid matter outlet (11) opposite of said inlet (1); and
- processing said removed oil gas and water vapour in a gas separator.

23. The method according to claim 22, wherein heating said outer tank (33) comprises heating at least a bottom portion of said outer tank (33) for driving convection of said smelted Lead automatically.

24. The method according to any one of the claims 22 - 23, wherein transporting said oil contaminated sludge comprises rotating said rotating conveyor auger (5) at a rotation speed of 10 - 60 rotations per minutes.

## Patentansprüche

1. Schlammabscheider (0) für ölkontaminierte Schlammmassen, wobei der Schlammabscheider (0) umfasst:
- einen ersten zylindrischen, inneren Behälter (31) umfassend:
- einen Schlammeinlass (1),
- einen ersten Verdampfungsgasauslass (7);
- einen Feststoffauslass (11),
- eine Förderschnecke (5), die axial im Inneren des ersten, inneren Behälters (31) ausgerichtet ist, um die ölkontaminierten Schlammmassen von dem Schlammeinlass (1) zu dem Feststoffauslass (11) zu transportieren, wobei die Förderschnecke eine sich axial erstreckende Welle (5a) umfasst,
- einen zweiten zylindrischen, äußeren Behälter (33), der den ersten, inneren Behälter (31) umschließt, so dass ein Hohlraum (35) um den ersten, inneren Behälter (31) gebildet wird,
- ein Heizelement (13), das mindestens an einem unteren Teil des zweiten, äußeren Behälters (33) angeordnet ist, **dadurch gekennzeichnet, dass**
- der Hohlraum (35) in einem Betriebszustand des Schlammabscheiders mit geschmolzenem Blei (Pb) gefüllt ist, so dass die Wärme gleichmäßig über die gesamte Oberfläche (31i) des ersten, inneren Behälters (31) verteilt wird und dass die Förderschnecke (5) eine Vielzahl von radial sich erstreckenden Armen (53) umfasst, und jeder Arm (53) mit einem Förderschaufelpaar (52) mit einer ersten und einer zweiten Förderschaufel (54, 56) versehen ist, die an äußeren Enden der Arme (53) angeordnet sind, um die Schlammmassen in Umfangsrichtung um eine Innenfläche (31i) des Innenbehälters (31) herum zu schmieren, wobei die Schaufeln (54, 56) der Förderschnecke (5) einen Spalt zwischen ihrer Außenkante und der Innenfläche (31i) des inneren Behälters (31) aufweisen und in parallelen Paaren mit einem gegenseitigen Spalt angeordnet sind, wobei der Spalt teilweise mit mehr oder weniger nassen Schlammmassen zu füllen ist, die eine kontinuierlich ausgetauschte Abstreifmasse bilden werden, die entlang der Innenfläche (31i) des inneren Behälters (31) abstreift, wodurch ein Kontakt zwischen Stahl und Stahl entlang der Innenfläche (31i) des inneren Behälters (31) verhindert wird.

2. Schlammabscheider (0) nach Anspruch 1, wobei der erste, innere Behälter (31) asymmetrisch in dem zweiten, äußeren Behälter (33) angeordnet ist, so dass der Hohlraum (35) an einem unteren Abschnitt breiter und an einem oberen Abschnitt des Hohlraums (35) enger ist.

3. Schlammabscheider (0) nach Anspruch 2, wobei der Hohlraum (35) unten 4 cm breit ist und oben 1 cm breit ist, und wobei ein Durchmesser des ersten, inneren Behälters (31) 1200 mm beträgt.

4. Schlammabscheider (0) nach einem der vorhergehenden Ansprüche, wobei die Welle (5a) der Förderschnecke (5) ein erstes Ende in der Nähe des Einlasses (1) und ein zweites Ende in der Nähe des Feststoffauslasses (11) aufweist.

5. Schlammabscheider (0) nach einem der vorhergehenden Ansprüche, wobei die Drehgeschwindigkeit der Förderschnecke 10 bis 60 Umdrehungen pro Minute beträgt.

6. Schlammabscheider (0) nach einem der vorhergehenden Ansprüche, wobei die Förderschaufeln (54, 56) einen einstellbaren Anstellwinkel aufweisen.

7. Schlammabscheider (0) nach einem der vorangehenden Ansprüche, ferner umfassend einen Bleieinlass für die Zufuhr von Blei in den Hohlraum (35), wobei der Bleieinlass von dem Hohlraum (35) nach oben gerichtet ist.

8. Schlammabscheider (0) nach einem der vorhergehenden Ansprüche, ferner umfassend einen Argon-(Ar)-Einlass zur Zuführung von Argon unter Überdruck in den Hohlraum (35).

9. Schlammabscheider (0) nach Anspruch 8 und 9, wobei der Bleieinlass und der Argon-Einlass in demselben Abschnitt des Hohlraums (35) angeordnet sind.

10. Schlammabscheider (0) nach einem der vorhergehenden Ansprüche, ferner umfassend ein Beobachtungsfenster, um den Füllstand und den Zustand des Bleis in dem Hohlraum (35) zu beobachten.

11. Schlammabscheider (0) nach einem der vorhergehenden Ansprüche, wobei der Füllstand des geschmolzenen Bleis in dem Hohlraum (35) über der Oberseite des ersten, inneren Behälters (31) und bevorzugt auch über der Oberseite des zweiten, äußeren Behälters (33) liegt.

12. Schlammabscheider (0) nach einem der vorhergehenden Ansprüche, ferner umfassend einen zweiten Sicherheitsgasauslass (71), der mit dem ersten, inneren Behälter (31) verbunden ist, mit einer Berstscheibe zur Abschwächung von Explosionen innerhalb des ersten, inneren Behälters (31).

13. Schlammabscheider (0) nach einem der vorhergehenden Ansprüche, ferner umfassend eine Isolierschicht (39), die den zweiten, äußeren Behälter (33) mindestens teilweise bedeckt.

14. Schlammabscheider (0) nach einem der vorhergehenden Ansprüche, wobei das Heizelement (13) einen unteren Oberflächensektor der Oberfläche (33i) des zweiten, äußeren Behälters (33) bedeckt.

15. Schlammabscheider (0) nach Anspruch 14, wobei das Heizelement (13) einen unteren Oberflächensektor eines Drittels der Oberfläche (33i) des zweiten, äußeren Behälters (33) bedeckt.

16. Schlammabscheider (0) nach Anspruch 14 oder 15, wobei das Heizelement (13) in dem Boden leicht winklig asymmetrisch angeordnet ist, um die Konvektion automatisch anzutreiben.

17. Schlammabscheider (0) nach einem der Ansprüche 14 bis 16, wobei die Isolierschicht die übrigen Flächen der Oberfläche (33i) des zweiten, äußeren Behälters (33) bedeckt.

18. Schlammabscheider (0) nach einem der vorhergehenden Ansprüche, wobei das Heizelement (13) in eine Vielzahl von Unterheizelementen (13a, b, c, d) unterteilt ist, so dass die Heizelementtemperatur unabhängig gesteuert werden kann.

19. Schlammabscheider (0) nach Anspruch 18, wobei die Unterheizelemente (13a, b, c, d) in der Nähe des Einlasses (1) eine höhere Heizleistung als die Unterheizelemente (13a, b, c, d) in der Nähe des Feststoffauslasses (11) bereitstellen.

20. Schlammabscheider (0) nach einem der vorhergehenden Ansprüche, wobei das Heizelement (13) den ersten Behälter mit einer Temperatur erhitzt, die über dem Schmelzpunkt von Blei und unter dem Siedepunkt von Blei liegt.

21. Schlammabscheider (0) nach einem der vorhergehenden Ansprüche, wobei der erste Verdampfungsgasauslass in der Nähe eines oberen Abschnitts des ersten, inneren Behälters (31) angeordnet ist.

22. Verfahren zur Fest-Flüssig-Schlammabscheidung für ölkontaminierte Schlammmassen, wobei das Verfahren die folgenden Schritte umfasst:
- Zuführen von ölkontaminiertem Schlamm über einen Einlass (1) in ein erstes Ende eines ersten, zylindrischen inneren Behälters (31),
- Transportieren der ölkontaminierten Schlammmassen von dem Einlass (1) des zylindrischen inneren Behälters (31) zu einem gegenüberliegenden Auslass (11) durch eine rotierende Förderschnecke (5), welche eine sich axial erstreckende Welle (5a) aufweist und Schmieren des Schlamms am Umfang um eine Innenfläche (31i) des ersten inneren Behälters (31) mittels Förderschaufelpaare (52) mit einer ersten und einer zweiten Förderschaufel (54, 56), wobei die Förderschaufelpaare (52) an einem äußeren Ende jedes Arms (53) einer Vielzahl von sich radial erstreckenden Armen (53) angeordnet sind, wobei die Schaufeln (54, 56) der Förderschnecke (5) einen Spalt zwischen ihrer Außenkante und der Innenfläche (31i) des inneren Behälters (31) aufweisen und in parallelen Paaren mit einem gegenseitigen Spalt angeordnet sind, wobei der Spalt dazu bestimmt ist, teilweise mit mehr oder weniger nassen Schlammmassen gefüllt zu werden, die eine kontinuierlich ausgetauschte Abstreifmasse bilden werden, die entlang der Innenfläche (31i) des inneren Behälters (31) abstreift, wodurch ein Kontakt zwischen Stahl und Stahl entlang der Innenfläche (31i) des inneren Behälters (31) verhindert wird, während gleichzeitig der ölkontaminierte Schlamm durch gleichmäßiges Erwärmen der gesamten Oberfläche (31i) des inneren Behälters (31) durch geschmolzenes Blei (Pb), das den gesamten inneren Behälter (31) umgibt, erhitzt wird, durch Erhitzen eines äußeren Behälters (33), der das geschmolzene Blei enthält, das den inneren Behälter (31) umgibt, wodurch allmählich Wasser und Ölgas aus den Feststoffen des Schlamms verdampft werden,
- Entfernen des Erdölgases und des Wasserdampfs über einen ersten Gasauslass (7),
- Entfernen der dekontaminierten Feststoffe über einen Feststoffauslass (11) gegenüber dem Einlass (1); und
- Verarbeiten des entfernten Erdölgases und Wasserdampfes in einem Gasabscheider.

23. Verfahren nach Anspruch 22, wobei das Erhitzen des äußeren Behälters (33) das Erhitzen mindestens eines Bodenabschnitts des äußeren Behälters (3) umfasst, um die Konvektion des geschmolzenen Bleis automatisch anzutreiben.

24. Verfahren nach einem der Ansprüche 22 bis 23, wobei das Transportieren des ölkontaminierten Schlamms das Drehen der rotierenden Förderschnecke (5) mit einer Drehzahl von 10 bis 60 Umdrehungen pro Minute umfasst.

## Revendications

1. Séparateur de boue (0) pour des masses de boue contaminée par du pétrole, le séparateur de boue (0) comprenant :
- un premier réservoir interne cylindrique (31) comprenant :
- une entrée de boue (1) ;
- une première sortie de gaz évaporé (7) ;
- une sortie de matière solide (11) ;
- une tarière de transport (5) alignée axialement à l'intérieur dudit premier réservoir interne (31) pour transporter lesdites masses de boue contaminée par du pétrole depuis ladite entrée de boue (1) en direction de ladite sortie de matière solide (11), ladite tarière de transport comprenant un arbre s'étendant axialement (5a) ;
- un deuxième réservoir externe cylindrique (33) renfermant ledit premier réservoir interne (31) de telle sorte qu'une cavité (35) soit formée autour dudit premier réservoir interne (31) ;
- un élément de chauffage (13) agencé au moins au niveau d'une partie inférieure dudit deuxième réservoir externe (33), **caractérisé en ce que** :
- ladite cavité (35), dans un état opérationnel dudit séparateur de boue, est remplie de plomb fondu (Pb) de manière à distribuer la chaleur de façon uniforme sur la totalité de la surface (31i) dudit premier réservoir interne (31), et **en ce que** ladite tarière de transport (5) comprend une pluralité de bras s'étendant radialement (53), et chaque bras (53) est muni d'une paire de lames de transport (52) comprenant des première et deuxième lames de transport (54, 56) agencées au niveau d'extrémités externes desdits bras (53) pour étaler les masses de boue de façon périphérique autour d'une surface interne (31i) dudit réservoir interne (31), dans lequel les lames (54, 56) de la tarière de transport (5) présentent un espace entre leur bord externe et la surface interne (31i) du réservoir interne (31) et sont agencées en paires parallèles présentant un espace mutuel, ledit espace étant destiné à être rempli partiellement avec plus ou moins de masses de boue humide destinées à former une masse de balayage remplacée en continu réalisant un balayage le long de la surface interne (31i) du réservoir interne (31), ce qui empêche ainsi un contact acier sur acier le long de la surface interne (31i) du réservoir interne (31).

2. Séparateur de boue (0) selon la revendication 1, dans lequel ledit premier réservoir interne (31) est agencé de façon asymétrique dans ledit deuxième réservoir externe (33) de telle sorte que ladite cavité (35) soit plus large au niveau d'une partie de fond et plus étroite au niveau d'une partie de sommet de ladite cavité (35).

3. Séparateur de boue (0) selon la revendication 2, dans lequel ladite cavité (35) présente une largeur de 4 cm au fond et une largeur de 1 cm au sommet, et dans lequel un diamètre dudit premier réservoir interne (31) est de 1200 mm.

4. Séparateur de boue (0) selon l'une quelconque des revendications précédentes, dans lequel l'arbre (5a) de la tarière de transport (5) comporte une première extrémité agencée à proximité de ladite entrée (1) et une deuxième extrémité agencée à proximité de ladite sortie de matière solide (11).

5. Séparateur de boue (0) selon l'une quelconque des revendications précédentes, dans lequel la vitesse de rotation de ladite tarière de transport est de 10 à 60 rotations par minute.

6. Séparateur de boue (0) selon l'une quelconque des revendications précédentes, dans lequel les lames de transport (54, 56) présentent un angle d'attaque réglable.

7. Séparateur de boue (0) selon l'une quelconque des revendications précédentes, comprenant en outre une entrée de plomb pour introduire du plomb dans ladite cavité (35), dans lequel ladite entrée de plomb est dirigée vers le haut par rapport à ladite cavité (35).

8. Séparateur de boue (0) selon l'une quelconque des revendications précédentes, comprenant en outre une entrée d'argon (Ar) pour introduire de l'argon sous surpression dans ladite cavité (35).

9. Séparateur de boue (0) selon les revendications 8 et 9, dans lequel ladite entrée de plomb et ladite entrée d'argon sont agencées à l'intérieur d'une même partie de ladite cavité (35).

10. Séparateur de boue (0) selon l'une quelconque des revendications précédentes, comprenant en outre une fenêtre d'observation pour voir le niveau et l'état du plomb dans la cavité (35).

11. Séparateur de boue (0) selon l'une quelconque des revendications précédentes, dans lequel le niveau de plomb fondu dans ladite cavité (35) est au-delà du sommet du premier réservoir interne (31) et de préférence également, au-delà du sommet du deuxième réservoir externe (33).

12. Séparateur de boue (0) selon l'une quelconque des revendications précédentes, comprenant en outre une deuxième sortie de gaz de sécurité (71), connectée au premier réservoir interne (31), munie d'un disque de rupture pour limiter les explosions à l'intérieur dudit premier réservoir interne (31).

13. Séparateur de boue (0) selon l'une quelconque des revendications précédentes, comprenant en outre une couche d'isolation (39) qui recouvre au moins partiellement ledit deuxième réservoir externe (33).

14. Séparateur de boue (0) selon l'une quelconque des revendications précédentes, dans lequel ledit élément de chauffage (13) recouvre un secteur de surface de fond de la surface (33i) dudit deuxième réservoir externe (33).

15. Séparateur de boue (0) selon la revendication 14, dans lequel ledit élément de chauffage (13) recouvre un secteur de surface de fond d'un tiers de la surface (33i) dudit deuxième réservoir externe (33).

16. Séparateur de boue (0) selon la revendication 14 ou 15, dans lequel ledit élément de chauffage (13) au niveau du fond est agencé de façon légèrement asymétrique angulairement pour déclencher automatiquement la convection.

17. Séparateur de boue (0) selon l'une quelconque des revendications 14 à 16, dans lequel ladite couche d'isolation recouvre les surfaces restantes de la surface (33i) du deuxième réservoir externe (33).

18. Séparateur de boue (0) selon l'une quelconque des revendications précédentes, dans lequel ledit élément de chauffage (13) est subdivisé en une pluralité de sous-éléments de chauffage (13a, b, c, d) de telle sorte que la température de l'élément de chauffage puisse être contrôlée de manière indépendante.

19. Séparateur de boue (0) selon la revendication 18, dans lequel lesdits sous-éléments de chauffage (13a, b, c, d) à proximité de ladite entrée (1) fournissent une puissance de chauffage plus élevée que les sous-éléments de chauffage (13a, b, c, d) à proximité de ladite sortie de matière solide (11).

20. Séparateur de boue (0) selon l'une quelconque des revendications précédentes, dans lequel ledit élément de chauffage (13) chauffe le premier réservoir à une température plus élevée que le point de fusion du plomb et en-deçà du point d'ébullition du plomb.

21. Séparateur de boue (0) selon l'une quelconque des revendications précédentes, dans lequel ladite première sortie de gaz évaporé est agencée à proximité d'une partie de sommet dudit premier réservoir interne (31).

22. Procédé de séparation de solides/liquide de boue pour des masses de boue contaminée par du pétrole, dans lequel le procédé comprend les étapes de :
- l'introduction de boue contaminée par du pétrole via une entrée (1) à l'intérieur d'une première extrémité d'un premier réservoir interne cylindrique (31) ;
- le transport desdites masses de boue contaminée par du pétrole depuis ladite entrée (1) dudit réservoir interne cylindrique (31) jusqu'à une sortie agencée à l'opposé (11) au moyen d'une tarière de transport rotative (5) comportant un arbre s'étendant axialement (5a) et l'étalement de ladite boue de façon périphérique autour d'une surface interne (31i) dudit premier réservoir interne (31) au moyen de paires de lames de transport (52) comprenant des première et deuxième lames de transport (54, 56), lesdites paires de lames de transport (52) étant agencées au niveau d'une extrémité externe de chaque bras (53) d'une pluralité de bras s'étendant radialement (53), dans lequel les lames (54, 56) de la tarière de transport (5) présentent un espace entre leur bord externe et la surface interne (31i) du réservoir interne (31) et sont agencées en paires parallèles présentant un espace mutuel, ledit espace étant destiné à être rempli partiellement avec plus ou moins de masses de boue humide destinées à former une masse de balayage remplacée en continu réalisant un balayage le long de la surface interne (31i) du réservoir interne (31), empêchant ainsi un contact acier sur acier le long de la surface interne (31i) du réservoir interne (31), tout en chauffant en même temps ladite boue contaminée par du pétrole en chauffant de façon uniforme la totalité de la surface (31i) dudit réservoir interne (31) au moyen de plomb fondu (Pb) qui entoure l'intégralité du réservoir interne (31), en chauffant un réservoir externe (33) qui contient le plomb fondu qui entoure ledit réservoir interne (31), moyennant quoi l'eau et du gaz de pétrole sont progressivement évaporés hors de la matière solide de la boue ;
- l'évacuation dudit gaz de pétrole et de ladite vapeur d'eau via une première sortie de gaz (7) ;
- l'évacuation de la matière solide décontaminée via une sortie de matière solide (11) opposée à ladite entrée (1) ; et
- le traitement dudit gaz de pétrole et de ladite vapeur d'eau évacués dans un séparateur de gaz.

23. Procédé selon la revendication 22, dans lequel le chauffage dudit réservoir externe (33) comprend le chauffage d'au moins une partie de fond dudit réservoir externe (33) pour déclencher automatiquement la convection dudit plomb fondu.

24. Procédé selon l'une quelconque des revendications 22 à 23, dans lequel le transport de ladite boue contaminée par du pétrole comprend l'entraînement en rotation de ladite tarière de transport rotative (5) à une vitesse de rotation de 10 à 60 rotations par minute.
